# EUROPEAN PATENT APPLICATION

(11) **EP 4 823 009 A2**
(43) Date of publication of application: **14.10.2026**
(21) Application number: 26200972.3
(22) Date of filing: 01.03.2022
(51) Int. Cl.: H04B 7/185

(54) **METHOD AND APPARATUS FOR DETERMINING UPDATE OF TIMING OFFSET, AND COMMUNICATION APPARATUS AND STORAGE MEDIUM**

(62) Document number(s) of the earlier application(s) in accordance with Art. 76 EPC: 22929267.7 / 4 489 481
(71) Applicant: Beijing Xiaomi Mobile Software Co., Ltd., Beijing 100085 (CN)
(72) Inventor: ZHU, Yajun, Beijing, 100085 (CN)
(74) Representative: Yoshida, Senko

(57) **Abstract**

The present invention relates to a method and apparatus for determining the update of a timing offset, and a communication apparatus and a storage medium. The method for determining the update of a timing offset comprises: determining to update a timing offset, wherein the timing offset is used for compensating for a timing advance; and updating the timing offset according to update information that is sent by a network device. In the present invention, a terminal can determine whether a timing offset needs to be updated, and when the terminal determines to update the timing offset, the terminal can update the timing offset according to update information that is sent by a network device, so as to actively acquire the update information, rather than passively waiting to receive the update information that is sent by the network device, which is conducive to the terminal acquiring the update information in a timely manner to update the timing offset, so as to accurately compensate for a timing advance according to the updated timing offset, thereby avoiding interference with uplink transmission.

## Description

### FIELD

The present invention relates to the field of communication technologies, and particularly to a method for determining an update of a timing offset, a method for determining an update of a timing offset, an apparatus for determining an update of a timing offset, an apparatus for determining an update of a timing offset, a communication device and a computer readable storage medium.

### BACKGROUND

In the non-terrestrial network (NTN), a terminal located on the ground may communicate with a base station located on the ground through a satellite.

Since the satellite is located at a high altitude and is far away from the terminal, the communication delay is relatively large. For a large delay, a large timing advance (TA) needs to be set. Regarding the timing advance, a timing offset, Koffset, also needs to be set for compensation, so as to prevent the terminal from performing uplink transmission at a slot before a slot for the network device to perform a corresponding downlink transmission.

At present, a value of the Koffset is instructed by the network device to the terminal. However, in some cases, the terminal fails to obtain the latest timing offset, which causes the terminal to be unable to make the compensation accurately, resulting in interference with the uplink transmission.

### SUMMARY

In view of this, embodiments of the present invention provide a method for determining an update of a timing offset, a method for determining an update of a timing offset, an apparatus for determining an update of a timing offset, an apparatus for determining an update of a timing offset, a communication device and a computer readable storage medium to solve technical problems in related technologies.

According to a first aspect of embodiments of the present invention, there is provided a method for determining an update of a timing offset, performed by a terminal, including: determining to update the timing offset, where the timing offset is used to compensate a timing advance; and updating the timing offset according to update information sent by a network device.

According to a second aspect of embodiments of the present invention, there is provided a method for transmitting information, performed by a network device, including: determining to update the timing offset of a terminal, where the timing offset is used to compensate the timing advance; and sending update information to the terminal for updating the timing offset.

According to a third aspect of embodiments of the present invention, there is provided an apparatus for determining an update of a timing offset, including: a processing module configured to determine to update the timing offset, where the timing offset is used to compensate a timing advance, and update the timing offset according to update information sent by a network device.

According to a fourth aspect of embodiments of the present invention, there is provided an apparatus for determining an update of a timing offset, including: a processing module configured to determine to update the timing offset of a terminal, where the timing offset is used to compensate the timing advance; and a sending module configured to send update information to the terminal for updating the timing offset.

According to a fifth aspect of embodiments of the present invention, there is provided a communication device, including: a processor; and a memory for storing a computer program, when executed by the processor, causes the method for determining the update of the timing offset as described above to be implemented.

According to a sixth aspect of embodiments of the present invention, there is provided a communication device, including: a processor; and a memory for storing a computer program, when executed by the processor, causes the method for determining the update of the timing offset as described above to be implemented.

According to a seventh aspect of embodiments of the present invention, there is provided a computer readable storage medium having stored therein a computer program that, when executed by a processor, causes the method for determining the update of the timing offset as described above to be implemented.

According to an eighth aspect of embodiments of the present invention, there is provided a computer readable storage medium having stored therein a computer program that, when executed by a processor, causes the method for determining the update of the timing offset as described above to be implemented.

According to the embodiments of the present invention, the terminal can determine whether the timing offset needs to be updated. If it is determined to update the timing offset, the terminal can update the timing offset according to the update information sent by the network device. Therefore, the terminal can obtain the update information in an active manner (instead of a passive manner, i.e., waiting to receive the update information sent by the network device), which is conducive for the terminal to obtain the update information in time to update the timing offset, so as to accurately compensate the timing advance according to the updated timing offset, thus avoiding the interference with the uplink transmission.

### BRIEF DESCRIPTION OF THE DRAWINGS

In order to clearly illustrate technical solutions of embodiments of the present invention, a brief description of drawings for the embodiments is given below. The drawings in the following description only show a part of the embodiments of the present invention, and those skilled in the art may obtain other drawings according to these drawings without creative work.
FIG. 1 is a schematic flow chart illustrating a method for determining an update of compensation according to embodiments of the present invention.
FIG. 2 is a schematic flow chart illustrating another method for determining an update of compensation according to embodiments of the present invention.
FIG. 3 is a schematic flow chart illustrating yet another method for determining an update of compensation according to embodiments of the present invention.
FIG. 4 is a schematic flow chart illustrating a further method for determining an update of compensation according to embodiments of the present invention.
FIG. 5 is a schematic flow chart illustrating a further method for determining an update of compensation according to embodiments of the present invention.
FIG. 6 is a schematic flow chart illustrating a method for determining an update of a timing offset according to embodiments of the present invention.
FIG. 7 is a schematic flow chart illustrating another method for determining an update of a timing offset according to embodiments of the present invention.
FIG. 8 is a schematic flow chart illustrating yet another method for determining an update of a timing offset according to embodiments of the present invention.
FIG. 9 is a schematic block diagram illustrating an apparatus for determining an update of compensation according to embodiments of the present invention.
FIG. 10 is a schematic block diagram illustrating an apparatus for determining an update of a timing offset according to embodiments of the present invention.
FIG. 11 is a schematic block diagram illustrating a device for updating a timing offset according to embodiments of the present invention.
FIG. 12 is a schematic block diagram illustrating a device for determining an update of a timing offset according to embodiments of the present invention.

### DETAILED DESCRIPTION

Reference will be made to clearly and completely describe technical solutions of the embodiments of the present invention with the accompanying drawings. The embodiments described herein are only a part of the embodiments of the present invention and are not all embodiments of the present invention. Based on the embodiments of the present invention, those skilled in the art may obtain other embodiments without creative work, and these embodiments shall be considered within the scope of the present invention.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

For purposes of conciseness and ease of understanding, terms "greater than" or "less than", "higher than" or "lower than" are used herein in characterizing size relationships. It may be understood for a person skilled in the art that the term "greater than" covers a meaning of "greater than or equal to", and the term "less than" covers a meaning of "less than or equal to"; the term "higher than" covers a meaning of "higher than or equal to", and the term "lower than" covers a meaning of "lower than or equal to".

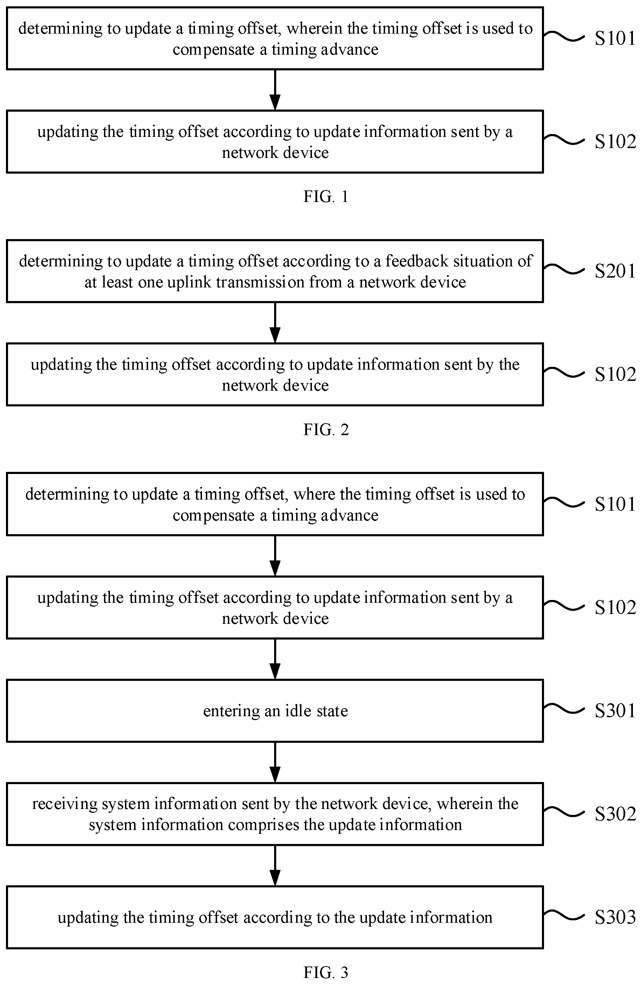

FIG. 1 is a schematic flow chart illustrating a method for determining an update of compensation according to embodiments of the present invention. The method for determining the update of the compensation shown in the embodiments may be performed by a terminal. The terminal includes, but is not limited to, a communication device such as a mobile phone, a tablet computer, a wearable device, a sensor, and an Internet of Things device. The terminal may be communicated with a network device. The network device includes, but is not limited to, a network device in a 4G, 5G, 6G communication systems, such as a base station, and a core network.

As shown in FIG. 1, the method for determining an update of a timing offset may include the following steps.

In S101, it is determined to update the timing offset. The timing offset is used to compensate a timing advance.

In S102, the timing offset is updated according to update information sent by a network device (specifically, it may refer to updating a value of the timing offset).

In an embodiment, the network device may be a network device in a non-terrestrial network (NTN), the terminal may be a terminal in the NTN, and the network device and the terminal may be communicated via an air communication device, such as a satellite.

In an embodiment, in the NTN, the communication between the terminal and the network device needs the satellite, the satellite is located at a high altitude and is far away from the terminal and the network device, resulting in a large signal transmission delay. In order to compensate for the large transmission delay, it requires to set a large timing advance (TA).

Due to the large timing advance, a slot for the terminal to perform uplink transmission may be before a slot for the network device to perform a corresponding downlink transmission. That is, before receiving the downlink transmission sent by the network device, the terminal needs to perform the uplink transmission corresponding to the downlink transmission, which will cause some problems.

Therefore, by setting the timing offset, Koffset, the timing advance may be compensated. Specifically, compensation may be made in a case where the slot for the terminal to perform the uplink transmission is located before the slot for the network device to perform the corresponding downlink transmission, and this case is caused by the timing advance. After the compensation, the slot where the uplink transmission of the terminal is located is no earlier than the slot where the corresponding downlink transmission of the network device is located. For example, the slot where the uplink transmission of the terminal is located may be aligned with the slot where the corresponding downlink transmission of the network device is located.

In the NTN, since the network device and the terminal are communicated with each other via the satellite, and the position of the satellite in the sky changes, the transmission delay will change, the timing advance will change, and thus the timing offset which is used to compensate the timing advance will change accordingly. That is, the terminal needs to update the timing offset.

The network device may send the update information to the terminal in two manners to enable the terminal to update the timing offset. For example, the update information includes a cell-specific Koffset and a UE-specific Koffset.

On the one hand, a system information block (SIB) carrying the cell-specific Koffset is broadcast. On the other hand, unicast information is sent to the terminal. For example, a media access control control element (MAC CE) carries the UE-specific Koffset. The terminal may update a stored Koffset according to the cell-specific Koffset and the UE-specific Koffset.

However, in some cases, the terminal fails to successfully receive the update information from the network device, and thus fails to correctly update the Koffset. For example, for the cell-specific Koffset, since the network device sends it by the SIB and the SIB is broadcast, even if the terminal does not successfully receive the cell-specific Koffset in the SIB, it will not provide a hybrid automatic repeat request (HARQ) feedback, and the network device will not know that the terminal has not successfully received the cell-specific Koffset in the SIB and thus will not re-send the SIB to the terminal based on the HARQ feedback. In this case, the cell-specific Koffset stored in the terminal is not the latest one. It should be noted that the update information in the following embodiments is the cell-specific Koffset as example.

In this case, the terminal will not determine whether the Koffset needs to be updated. It will only continue to wait for a next reception of the SIB, and when the cell-specific Koffset in the SIB is successfully received, the timing offset will be updated based on the cell-specific Koffset in the SIB. Before successfully receiving the cell-specific Koffset in the SIB next time, because the terminal cannot correctly update the stored Koffset, a result of compensating the timing advance with the stored but not the latest Koffset is inaccurate, which causes interference with the uplink transmission.

According to the embodiments of the present invention, the terminal can determine whether the timing offset needs to be updated. If it is determined to update the timing offset, the terminal can update the timing offset according to the update information sent by the network device. Therefore, the terminal can obtain the update information in an active manner (instead of a passive manner, i.e., waiting to receive the update information sent by the network device), which is conducive for the terminal to obtain the update information in time to update the timing offset, so as to accurately compensate the timing advance according to the updated timing offset, thus avoiding the interference with the uplink transmission.

FIG. 2 is a schematic flow chart illustrating another method for determining an update of compensation according to embodiments of the present invention. As shown in FIG. 2, determining to update the timing offset includes the following step.

In S201, it is determined to update the timing offset according to a feedback situation of at least one uplink transmission from the network device.

In an embodiment, the terminal may send at least one uplink transmission to the network device, and the network device may provide feedback on the uplink transmission. For example, HARQ confirmation information may be fed back for each successfully received uplink transmission, so that the terminal can confirm that the uplink transmission has been successfully received.

However, when the uplink transmission is interfered, problems arise in the network device's feedback on the uplink transmission. For example, due to failure in receiving the uplink transmission, no feedback is provided or HARQ non-acknowledgement information is fed back. Therefore, the terminal may determine whether to update the timing offset according to the feedback situation of the at least one uplink transmission from the network device. For example, if the feedback situation is relatively good, there is no need to update the timing offset, and if the feedback situation is relatively poor, the timing offset needs to be updated.

The situation of determining to update the timing offset will be described in the following embodiments.

In an embodiment, determining to update the timing offset according to the feedback situation of the at least one uplink transmission from the network device incudes:
determining to update the timing offset in a case that no feedback on the uplink transmission is received within a preset time window.

In an embodiment, the terminal may detect whether the feedback on the uplink transmission from the network device is received within the preset time window. If it is determined that no feedback on the uplink transmission is received within the preset time window, then the terminal determines to update the timing offset.

A starting position and a length of the preset time window may be set as needed. For example, the length may be set to 10 milliseconds (ms), or 10 slots, and the starting position may be set to a specified time after any uplink transmission of the at least one uplink transmission.

In an embodiment, a proportion of uplink transmissions for which feedbacks are received within the preset time window to a plurality of uplink transmissions is lower than a preset proportion.

In an embodiment, when the terminal performs the plurality of uplink transmissions to the network device, it may detect a proportion of the uplink transmissions for which feedbacks are received within the preset time window to the plurality of uplink transmissions. When the detected proportion is lower than the preset proportion, the timing offset is determined to be updated.

For example, the number of the plurality of uplink transmissions is 10, and the preset proportion is 80%. The number of the feedbacks received is 2 and thus the proportion is 20%, which is less than the preset proportion of 80%, and it is determined to update the timing offset.

In an embodiment, a proportion of uplink transmissions for which feedbacks received within the preset time window are acknowledgments to a plurality of uplink transmissions is lower than a preset proportion.

In an embodiment, when the terminal performs the plurality of uplink transmissions to the network device, it may detect the proportion of the uplink transmissions for which feedbacks received within the preset time window are acknowledgments (such as HARQ-ACK) to the plurality of uplink transmissions. When the detected proportion is lower than the preset proportion, the timing offset is determined to be updated.

For example, the number of the plurality of uplink transmissions is 10, and the preset proportion is 70%. Among the feedbacks received, there are 4 acknowledgment messages and 6 non-acknowledgment messages (such as HARQ-NACK), and thus the proportion is 40%, which is less than the preset proportion, and it is determined to update the timing offset.

It should be noted that in the embodiments, no matter how many feedbacks are received, when calculating the proportion of the acknowledgments a denominator is determined as the total number of the uplink transmissions.

FIG. 3 is a schematic flow chart illustrating yet another method for determining an update of compensation according to embodiments of the present invention. As shown in FIG. 3, the method further includes the following steps.

In S301, an idle state is entered.

In S302, system information sent by the network device is received. The system information includes the update information.

In S303, the timing offset is updated according to the update information.

In an embodiment, when the terminal determines to update the timing offset, it may enter the idle state, and receive the system information (such as the SIB) sent by the network device, and update the timing offset according to the update information (such as cell-specific Koffset) carried in the system information.

In the case that the terminal fails to accurately update the timing offset, the uplink transmission will be interfered, which will not only cause difficulties for the network device in receiving the uplink transmission accurately, but may also cause errors in the downlink transmission sent to the terminal since the network device fails to receive the uplink transmission accurately.

In the embodiments, when the terminal determines to update the timing offset, that is, the currently stored timing offset is not accurate, it may enter the idle state, thus avoiding sending the uplink transmission to the network device and receiving the downlink transmission sent by the network device, which avoids the above technical problems.

In an embodiment, the method further includes:
initiating a random access to the network device.

After the terminal updates the timing offset, the timing offset is generally relatively accurate. The timing advance is compensated based on the updated timing offset, which may avoid interference with the uplink transmission. Therefore, the terminal may initiate the random access to the network device to reconnect to the network device and continue communication with the network device.

It should be noted that, in another embodiment, when the terminal determines to update the timing offset, it may send a request to the network device, to request the network device to send the update information, so as to receive the update information sent by the network device in time, otherwise, the terminal has to wait for a long time until a next successful reception of the SIB to obtain the update information.

In the above embodiments, whether the timing offset needs to be updated is determined by the terminal, and the operation of updating the timing offset is also performed by the terminal.

In other embodiments, whether the timing offset needs to be updated may be determined by the network device, and the operation of updating the timing offset is also performed by the network device. This situation may be described in the following embodiments.

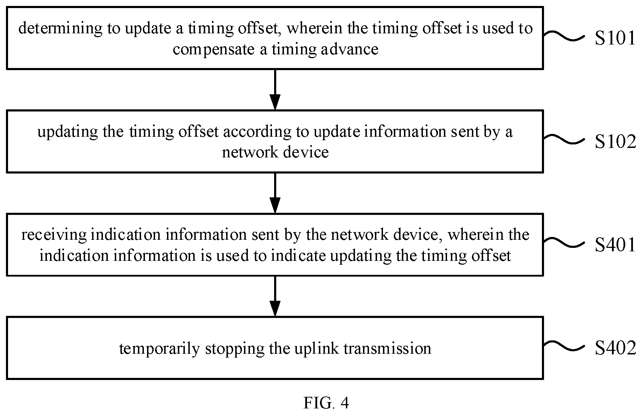

FIG. 4 is a schematic flow chart illustrating a further method for determining an update of compensation according to embodiments of the present invention. As shown in FIG. 4, the method further includes the following steps.

In S401, indication information sent by the network device is received. The indication information is used to indicate updating the timing offset.

In S402, the uplink transmission is temporarily stopped.

In an embodiment, whether the terminal needs to update the timing offset may be determined by the network device. When the network device determines that the terminal needs to update the timing offset, the network device may send the indication information to the terminal, where the indication information is used to indicate the update of the timing offset, so that the terminal knows that the timing offset needs to be updated.

After receiving the indication information sent by the network device, the terminal may stop the uplink transmission. Because when it is determined that the terminal needs to update the timing offset, the timing offset stored in the terminal is not the latest one and thus is not accurate. The uplink transmission will be interfered, making it difficult for the network device to accurately receive the uplink transmission.

By setting the terminal to stop the uplink transmission when it is determined according to the indication that the timing offset needs to be updated, resource waste caused in the case that the network device fails to successfully receive the uplink transmission due to the interference with the uplink transmission is avoided.

In an embodiment, the terminal may choose a type of the uplink transmission to be stopped based on needs or instructions from the network device. For example, the terminal may choose to stop the uplink transmission on dynamically scheduled resources, or it may choose to stop the uplink transmission on preconfigured resources.

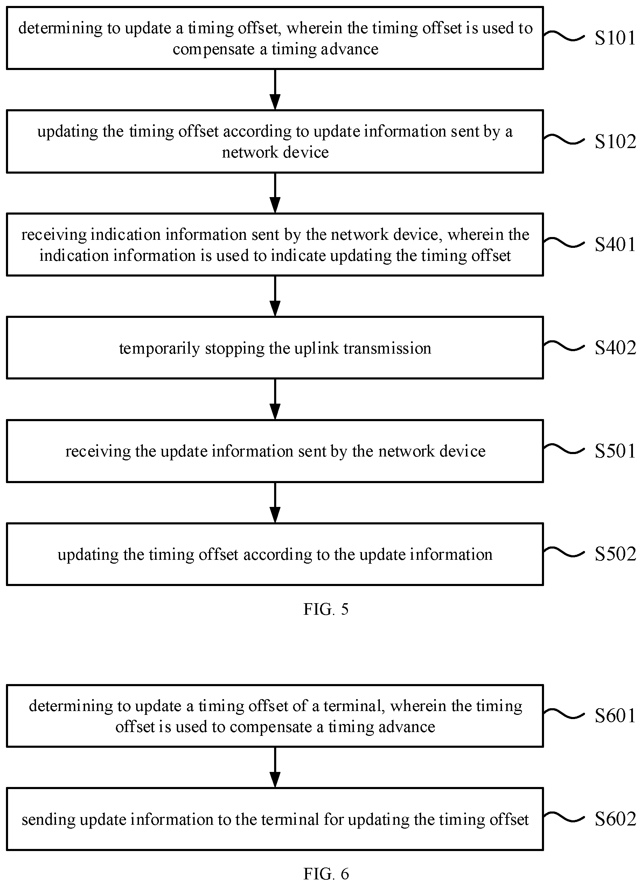

FIG. 5 is a schematic flow chart illustrating a further method for determining an update of compensation according to embodiments of the present invention. As shown in FIG. 5, the method further includes the following steps.

In S501, the update information sent by the network device is received.

In S502, the timing offset is updated according to the update information.

In an embodiment, after sending the indication information to the terminal, the network device may further send the update information to the terminal, where the configuration for the update information may be pre-agreed or may be instructed by the network device, for example, may be carried in the indication information which is instructed to the terminal.

Furthermore, the terminal may update the timing offset according to the update information, where the update information includes, but is not limited to, cell-specific Koffset. Since the UE-specific Koffset is carried by the MAC CE and the MAC CE is unicast information, the terminal may feed non-acknowledgments back to the network device if it fails to receive the MAC CE. In this way, the network device may promptly send the latest UE-specific Koffset to the terminal according to the feedback from the terminal, so the UE-specific Koffset stored in the terminal is generally the latest. Therefore, the terminal may update the timing offset, Koffset, according to the stored UE-specific Koffset and the cell-specific Koffset in the update information.

In an embodiment, receiving the update information sent by the network device includes:
receiving the update information carried in radio resource control (RRC)-dedicated signaling from the network device.

In an embodiment, the network device may send the update information carried in the RRC-dedicated signaling to the terminal, and this operation may be performed when the terminal is in the connected state.

In an embodiment, receiving the update information sent by the network device includes:
receiving the update information carried in system information from the network device in a preset time window.

In an embodiment, the update information may be carried in the system information and sent to the terminal by the network device. The terminal may receive the update information in the preset time window. This operation may be performed when the terminal is in the connected state or when the terminal is in a non-connected state, such as the idle state or an inactive state. The preset time window may be pre-agreed or configured by the network device.

FIG. 6 is a schematic flow chart illustrating a method for determining an update of a timing offset according to embodiments of the present invention. The method for determining the update of the timing offset shown in the embodiments may be performed by a network device. The network device may be communicated with the terminal. The network device includes, but is not limited to, a base station in a communication system, such as a 4G, 5G or 6G base station. The terminal includes, but is not limited to, a communication device such as a mobile phone, a tablet computer, a wearable device, a sensor, and an Internet of Things device.

As shown in FIG. 6, the method for determining the update of the timing offset includes the following steps.

In S601, it is determined to update the timing offset of a terminal. The timing offset is used to compensate the timing advance.

In S602, update information is sent to the terminal to update the timing offset (specifically, it may refer to updating a value of the timing offset).

In an embodiment, the network device may be a network device in the NTN, the terminal may be a terminal in the NTN, and the network device and the terminal may be communicated via an air communication device, such as a satellite.

In an embodiment, in the NTN, the communication between the terminal and the network device needs the satellite, the satellite is located at a high altitude and is far away from the terminal and the network device, resulting in a large signal transmission delay. In order to compensate for the large transmission delay, it requires to set a large timing advance.

Due to the large timing advance, a slot for the terminal to perform the uplink transmission may be before a slot for the network device to perform a corresponding downlink transmission. That is, before receiving the downlink transmission sent by the network device, the terminal needs to perform the uplink transmission corresponding to the downlink transmission, which will cause some problems.

Therefore, by setting the timing offset, Koffset, the timing advance may be compensated. Specifically, compensation may be made in a case where the slot for the terminal to perform the uplink transmission is located before the slot for the network device to perform the corresponding downlink transmission, and this case is caused by the timing advance. After the compensation, the slot where the uplink transmission of the terminal is located is no earlier than the slot where the corresponding downlink transmission of the network device is located. For example, the slot where the uplink transmission of the terminal is located may be aligned with the slot where the corresponding downlink transmission of the network device is located.

In the NTN, since the network device and the terminal are communicated with each other via the satellite, and the position of the satellite in the sky changes, the transmission delay will change, the timing advance will change, and thus the timing offset which is used to compensate the timing advance will change accordingly. That is, the terminal needs to update the timing offset.

The network device may send the update information to the terminal in two manners to enable the terminal to update the timing offset. For example, the update information includes a cell-specific Koffset and a UE-specific Koffset.

On the one hand, a system information block (SIB) carrying the cell-specific Koffset is broadcast. On the other hand, unicast information is sent to the terminal. For example, the MAC CE carries the UE-specific Koffset. The terminal may update a stored Koffset according to the cell-specific Koffset and the UE-specific Koffset.

However, in some cases, the terminal fails to successfully receive the update information from the network device, and thus fails to correctly update the Koffset. For example, for the cell-specific Koffset, since the network device sends it by the SIB and the SIB is broadcast, even if the terminal does not successfully receive the cell-specific Koffset in the SIB, it will not provide a hybrid automatic repeat request (HARQ) feedback, and the network device will not know that the terminal has not successfully received the cell-specific Koffset in the SIB and thus will not re-send the SIB to the terminal based on the HARQ feedback. In this case, the cell-specific Koffset stored in the terminal is not the latest one. It should be noted that the update information in the following embodiments is the cell-specific Koffset as example.

In this case, the terminal will not determine whether the Koffset needs to be updated. It will only continue to wait for a next reception of the SIB, and when the cell-specific Koffset in the SIB is successfully received, the timing offset will be updated based on the cell-specific Koffset in the SIB. Before successfully receiving the cell-specific Koffset in the SIB next time, because the terminal cannot correctly update the stored Koffset, a result of compensating the timing advance with the stored but not the latest Koffset is inaccurate, which causes the interference with the uplink transmission.

According to the embodiments of the present invention, the network device can determine whether the timing offset needs to be updated. If it is determined that the terminal needs to update the timing offset, the network device can send the update information to the terminal to update the timing offset, otherwise, it has to wait until a next transmission of the system information to send the update information to the terminal. In this way, it is conducive for the terminal to obtain the update information in time to update the timing offset, so as to accurately compensate the timing advance according to the updated timing offset, thus avoiding the interference with the uplink transmission.

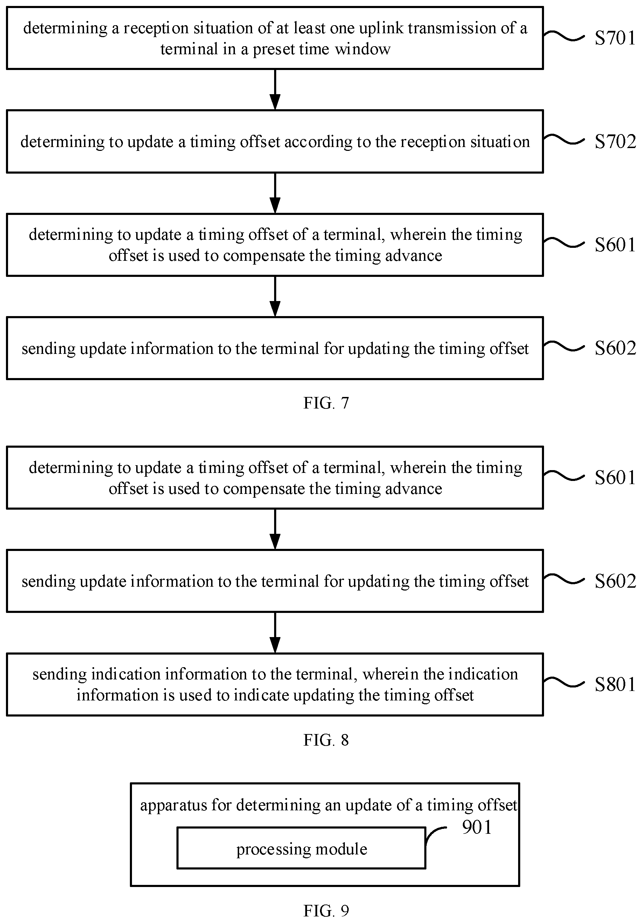

FIG. 7 is a schematic flow chart illustrating another method for determining an update of a timing offset according to embodiments of the present invention. As shown in FIG. 7, determining to update the timing offset of the terminal includes the following steps.

In S701, a reception situation of at least one uplink transmission of the terminal in a preset time window is determined.

In S702, it is determined to update the timing offset according to the reception situation.

In an embodiment, the terminal may send at least one uplink transmission to the network device. When the uplink transmission is interfered, problems arise in the network device's reception of the uplink transmission, such as failure in receiving the uplink transmission or feedback of HARQ non-acknowledgement information. Therefore, the network device may determine whether the terminal needs to update the timing offset according to the reception situation of the at least one uplink transmission. For example, if the reception situation is relatively good, there is no need to update the timing offset, and if the reception situation is relatively poor, the timing offset needs to be updated.

In an embodiment, determining to update the timing offset according to the reception situation includes:
determining to update the timing offset in a case that the uplink transmission of the terminal is not successfully received within the preset time window.

In an embodiment, the terminal may detect whether the feedback on the uplink transmission from the network device is received within the preset time window. If it is determined that the uplink transmission of the terminal is not successfully received within the preset time window, it may be determined that the uplink transmission of the terminal is interfered and the timing offset is determined to be updated.

A starting position and a length of the preset time window may be set as needed. For example, the length may be set to 10 ms, or 10 slots, and the starting position may be set to a specified time after any uplink transmission of the at least one uplink transmission.

In an embodiment, a plurality of uplink transmissions exist, determining to update the timing offset in a case that the uplink transmission of the terminal is not successfully received within the preset time window includes:
determining to update the timing offset in a case that a proportion of uplink transmissions that have been successfully received from the terminal within the preset time window is lower than a preset proportion.

In an embodiment, when the terminal performs a plurality of uplink transmissions to the network device, the proportion of uplink transmissions that have been successfully received (and successfully decoded) within the preset time window may be detected. When the detected proportion is lower than the preset proportion, the timing offset is determined to be updated.

For example, the number of uplink transmissions is 10, the preset proportion is 90%. The number of successful receptions is 3, and thus the proportion is 30%, which is less than the preset proportion of 90%, and it is determined to update the timing offset.

It should be noted that the preset time windows involved in all embodiments of the present invention may be related or independent of each other. The preset time windows in different embodiments may be the same or different. The preset proportions involved in all embodiments of the present invention may be related or independent of each other. The preset proportions in different embodiments may be the same or different.

FIG. 8 is a schematic flow chart illustrating yet another method for determining an update of a timing offset according to embodiments of the present invention. As shown in FIG. 8, the method further includes the following step.

In S801, indication information is sent to the terminal. The indication information is used to indicate updating the timing offset.

In an embodiment, whether the terminal needs to update the timing offset may be determined by the network device. When the network device determines that the terminal needs to update the timing offset, the network device may send the indication information to the terminal to indicate the update of the timing offset, so that the terminal knows that the timing offset needs to be updated.

After receiving the indication information sent by the network device, the terminal may stop the uplink transmission. Because when it is determined that the terminal needs to update the timing offset, the timing offset stored in the terminal is not accurate. The uplink transmission will be interfered, making it difficult for the network device to accurately receive the uplink transmission.

By setting the terminal to stop the uplink transmission when it is determined according to the indication that the timing offset needs to be updated, resource waste caused by the case that the network device fails to successfully receive the uplink transmission due to the interference with the uplink transmission is avoided.

In an embodiment, the terminal may choose a type of the uplink transmission to be stopped based on needs or instructions from the network device. For example, the terminal may choose to stop the uplink transmission on dynamically scheduled resources, or it may choose to stop the uplink transmission on preconfigured resources.

In an embodiment, after sending the indication information to the terminal, the network device may further send the update information to the terminal, where the configuration for the update information may be pre-agreed or may be instructed by the network device, for example, may be carried in the indication information which is instructed to the terminal.

Furthermore, the terminal may update the timing offset according to the update information, where the update information includes, but is not limited to, cell-specific Koffset. Since the UE-specific Koffset is carried by the MAC CE and the MAC CE is unicast information, the terminal may feed non-acknowledgments back to the network device if it fails to receive the MAC CE. In this way, the network device may promptly send the latest UE-specific Koffset to the terminal according to the feedback from the terminal, so the UE-specific Koffset stored in the terminal is generally the latest. Therefore, the terminal may update the timing offset, Koffset, according to the stored UE-specific Koffset and the cell-specific Koffset in the update information.

In an embodiment, sending the update information to the terminal for updating the timing offset includes:
sending the update information to the terminal through radio resource control (RRC)-dedicated signaling for updating the timing offset.

In an embodiment, the network device may send the update information carried in the RRC-dedicated signaling to the terminal, and this operation may be performed when the terminal is in the connected state.

In an embodiment, sending the update information to the terminal for updating the timing offset includes:
sending the update information through system information in a preset time window for updating the timing offset.

In an embodiment, the update information may be carried in the system information and sent to the terminal by the network device. The terminal may receive the update information in the preset time window. This operation may be performed when the terminal is in the connected state or when the terminal is in a non-connected state, such as the idle state or the inactive state. The preset time window may be pre-agreed or configured by the network device.

Corresponding to the foregoing embodiments of the method for determining the update of the compensation, the present invention further provides embodiments of an apparatus for determining an update of compensation.

FIG. 9 is a schematic block diagram illustrating an apparatus for determining an update of compensation according to embodiments of the present invention. The apparatus for determining an update of compensation is applicable to a terminal. The terminal includes, but is not limited to, a communication device such as a mobile phone, a tablet computer, a wearable device, a sensor, and an Internet of Things device. The terminal may be communicated with a network device. The network device includes, but is not limited to, a network device in a 4G, 5G, 6G communication systems, such as a base station, and a core network.

As shown in FIG. 9, the apparatus for determining an update of a timing offset includes:
a processing module 901 configured to determine to update the timing offset, where the timing offset is used to compensate a timing advance, and update the timing offset according to update information sent by a network device.

In an embodiment, the processing module is configured to determine to update the timing offset according to a feedback situation of at least one uplink transmission from the network device.

In an embodiment, the processing module is configured to determine to update the timing offset in a case that no feedback on the uplink transmission is received within a preset time window.

In an embodiment, a proportion of uplink transmissions for which feedbacks are received within the preset time window to a plurality of uplink transmissions is lower than a preset proportion.

In an embodiment, a proportion of uplink transmissions for which feedbacks received within the preset time window are acknowledgments to a plurality of uplink transmissions is lower than a preset proportion.

In an embodiment, the processing module is configured to enter an idle state; receive system information sent by the network device, where the system information includes the update information; and update the timing offset according to the update information.

In an embodiment, the apparatus further includes an accessing module configured to initiate a random access to the network device.

In an embodiment, the apparatus further includes a receiving module configured to receive indication information sent by the network device, where the indication information is used to indicate updating the timing offset. The processing module is further configured to temporarily stop the uplink transmission.

In an embodiment, the receiving module is further configured to receive the update information sent by the network device, and the processing module is further configured to update the timing offset according to the update information.

In an embodiment, the receiving module is configured to receive the update information carried in radio resource control (RRC)-dedicated signaling from the network device.

In an embodiment, the receiving module is configured to receive the update information carried in system information from the network device in a preset time window.

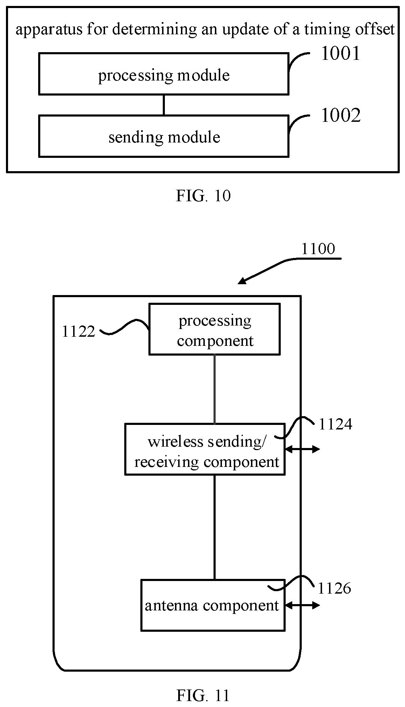

FIG. 10 is a schematic block diagram illustrating an apparatus for determining an update of a timing offset according to embodiments of the present invention. The apparatus for determining the update of the timing offset is applicable to a network device. The network device may be communicated with a terminal. The network device includes, but is not limited to, a base station in a communication system, such as a 4G, 5G or 6G base station, and the terminal includes, but is not limited to, a communication device such as a mobile phone, a tablet computer, a wearable device, a sensor, and an Internet of Things device.

As shown in FIG. 10, the apparatus for determining the update of the timing offset includes:
a processing module 1001 configured to determine to update the timing offset of a terminal, where the timing offset is used to compensate the timing advance; and
a sending module 1002 configured to send update information to the terminal for updating the timing offset.

In an embodiment, the processing module is configured to determine a reception situation of at least one uplink transmission of the terminal in a preset time window; and determine to update the timing offset according to the reception situation.

In an embodiment, the processing module is configured to determine to update the timing offset in a case that the uplink transmission of the terminal is not successfully received within the preset time window.

In an embodiment, a plurality of uplink transmissions exist, the processing module is configured to determine to update the timing offset in a case that a proportion of uplink transmissions that have been successfully received from the terminal within the preset time window is lower than a preset proportion.

In an embodiment, the sending module is configured to send indication information to the terminal, where the indication information is used to indicate updating the timing offset.

In an embodiment, the sending module is configured to send the update information to the terminal through radio resource control (RRC)-dedicated signaling for updating the timing offset.

In an embodiment, the sending module is configured to send the update information through system information in a preset time window for updating the timing offset.

With regard to the apparatus in the above embodiments, the specific manner in which each module executes operation(s) has been described in detail in the embodiments of related methods, and will not be described in detail here.

As for the apparatus embodiments, since they basically correspond to the method embodiments, details may be referred to the part of the description of the method embodiments. The apparatus embodiments described above are only illustrative, and the modules described as separate components may or may not be physically separated, and the components shown as modules may or may not be physical modules, that is, they may be located in integration, or it may be distributed as multiple network modules. Part or all of the modules may be selected according to actual needs to achieve the purpose of the solution of the embodiments. It can be understood and implemented by those skilled in the art without creative effort.

Embodiments of the present invention further provide a communication device, including: a processor, and a memory for storing a computer program. When the computer program is executed by the processor, the method for determining the update of the timing offset according to any of the above embodiments is implemented.

Embodiments of the present invention further provide a communication device, including: a processor, and a memory for storing a computer program. When the computer program is executed by the processor, the method for determining the update of the timing offset according to any of the above embodiments is implemented.

Embodiments of the present invention further provide a computer readable storage medium for storing the computer program. When the computer program is executed by a processor, steps in the method for determining the update of the timing offset according to any of the above embodiments is implemented.

Embodiments of the present invention further provide a computer readable storage medium for storing the computer program. When the computer program is executed by a processor, steps in the method for determining the update of the timing offset according to any of the above embodiments is implemented.

As shown in FIG. 11, FIG. 11 is a schematic block diagram illustrating a device for updating a timing offset according to embodiments of the present invention. The device 1100 may be provided as the base station. Referring to FIG. 11, the device 1100 includes a processing component 1122, which may further include one or more processors, a wireless sending/receiving component 1124, an antenna component 1126, and a signal processing portion specific to the wireless interface. One of the processors in the processing component 1122 may be configured to implement the method for determining the update of the timing offset according to any of the above embodiments.

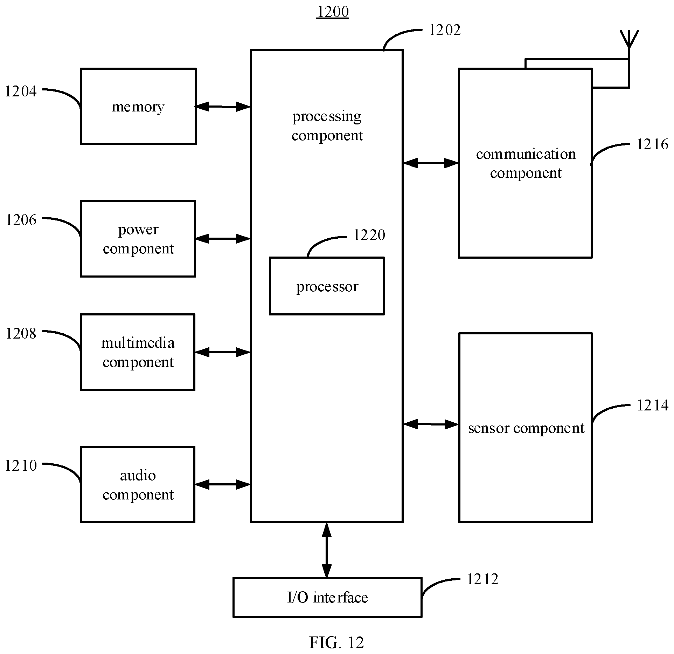

FIG. 12 is a schematic block diagram illustrating a device for determining an update of a timing offset according to embodiments of the present invention. For example, the device 1200 can be a mobile phone, a computer, a digital broadcast terminal, a messaging device, a game console, a tablet device, a medical device, a fitness device, a personal digital assistant, or the like.

Referring to FIG. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described method for determining the update of the timing offset. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, a button and the like. The button may include, but not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may further include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, 4G LTE, 5G NR or a combination thereof. In an embodiment, the communication component 1216 receives a broadcast signal or broadcast associated information from an external broadcast management system via a broadcast channel. In an embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for determining the update of the timing offset.

In embodiments, there is further provided a non-transitory computer-readable storage medium (such as the memory 1204) including instructions that, when executed by the processor 1220 of the device 1200, to perform any of the above-described methods for determining the update of the timing offset. For example, the non-transitory computer-readable storage medium may be a ROM, a RAM, a CD-ROM, a magnetic tape, a floppy disc, an optical data storage device, and the like.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

Further embodiments are now described.
A 1^{st} embodiment provides a method for determining an update of a timing offset, performed by a terminal, comprising:
   determining (S101) to update the timing offset, wherein the timing offset is used to compensate a timing advance; and
   updating (S102) the timing offset according to update information sent by a network device.
A 2^{nd} embodiment provides the method according to the 1^{st} embodiment, wherein determining (S101) to update the timing offset comprises:
   determining (S201) to update the timing offset according to a feedback situation of at least one uplink transmission from the network device.
A 3^{rd} embodiment provides the method according to the 2^{nd} embodiment, wherein determining (S201) to update the timing offset according to the feedback situation of the at least one uplink transmission from the network device comprises at least one of:
   determining to update the timing offset in a case that no feedback on the uplink transmission is received within a preset time window;
   determining to update the timing offset in a case that a proportion of uplink transmissions for which feedbacks are received within a preset time window to a plurality of uplink transmissions is lower than a preset proportion; or
   determining to update the timing offset in a case that a proportion of uplink transmissions for which feedbacks received within a preset time window are acknowledgments to a plurality of uplink transmissions is lower than a preset proportion.
A 4^{th} embodiment provides the method according to any one of the 1^{st} to 3^{rd} embodiments, further comprising:
   entering (S301) an idle state;
   receiving (S302) system information sent by the network device, wherein the system information comprises the update information; and
   updating (S303) the timing offset according to the update information;
   optionally, wherein the method further comprises:
      initiating a random access to the network device.
A 5^{th} embodiment provides the method according to any one of the 1^{st} to 3^{rd} embodiments, further comprising:
   receiving (S401) indication information sent by the network device, wherein the indication information is used to indicate updating the timing offset; and
   temporarily stopping (S402) the uplink transmission.
A 6^{th} embodiment provides the method according to the 4^{th} embodiment or 5^{th} embodiment, further comprising:
   receiving (S501) the update information sent by the network device; and
   updating (S502) the timing offset according to the update information.
A 7^{th} embodiment provides the method according to the 6^{th} embodiment, wherein receiving (S301) the update information sent by the network device comprises at least one of:
   receiving the update information carried in radio resource control, RRC-dedicated signaling from the network device; or
   receiving the update information carried in system information from the network device in a preset time window.
An 8^{th} embodiment provides a method for determining an update of a timing offset, performed by a network device, comprising:
   determining (S601) to update the timing offset of a terminal, wherein the timing offset is used to compensate a timing advance; and
   sending (S602) update information to the terminal for updating the timing offset.
A 9^{th} embodiment provides the method according to the 8^{th} embodiment, wherein determining (S601) to update the timing offset of the terminal comprises:
   determining (S701) a reception situation of at least one uplink transmission of the terminal in a preset time window; and
   determining (S702) to update the timing offset according to the reception situation.
A 10^{th} embodiment provides the method according to the 9^{th} embodiment, wherein determining (S702) to update the timing offset according to the reception situation comprises:
   determining to update the timing offset in a case that the uplink transmission of the terminal is not successfully received within the preset time window;
   optionally, wherein a plurality of uplink transmissions exist, and determining to update the timing offset in a case that the uplink transmission of the terminal is not successfully received within the preset time window comprises:
   determining to update the timing offset in a case that a proportion of uplink transmissions that have been successfully received from the terminal within the preset time window is lower than a preset proportion.
A 11^{th} embodiment provides the method according to any one of the 8^{th} to 10^{th} embodiments, further comprising:
   sending (S801) indication information to the terminal, wherein the indication information is used to indicate updating the timing offset.
A 12^{th} embodiment provides the method according to the 8^{th} embodiment, wherein sending (S602) the update information to the terminal for updating the timing offset comprises at least one of:
   sending the update information to the terminal through radio resource control, RRC-dedicated signaling for updating the timing offset; or
   sending the update information through system information in a preset time window for updating the timing offset.
A 13^{th} embodiment provides a terminal, comprising:
   a processing module (901) configured to determine to update the timing offset, wherein the timing offset is used to compensate a timing advance, and update the timing offset according to update information sent by a network device.
A 14^{th} embodiment provides a network device, comprising:
   a processing module (1001) configured to determine to update the timing offset of a terminal, wherein the timing offset is used to compensate a timing advance; and
   a sending module (1002) configured to send update information to the terminal for updating the timing offset.
A 15^{th} embodiment provides a computer-readable storage medium having stored therein a computer program that, when executed by a processor, causes the method for determining the update of the timing offset according to any one of the 1^{st} to 12^{th} embodiment to be implemented.

It will be appreciated that the present invention is not limited to the exact construction that has been described above and illustrated in the accompanying drawings, and that various modifications and changes can be made without departing from the scope thereof. The scope of the present invention is only limited by the appended claims.

It is to be noted that in this context, relational terms such as first and second are used solely to distinguish one entity or operation from another entity or operation, it does not necessarily require or imply any such actual relationship or sequence between these entities or operations. The term "comprise", "include" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and devices provided by the embodiments of the present invention have been described in detail above, and specific examples are used to illustrate the principle and implementation of the present invention. The description of the above embodiments is only used to help understand the methods and core ideas of the present invention. At the same time, for those skilled in the art, there will be some changes in the specific implementation and application scope according to the idea of the present invention. In summary, the content of the specification should not be construed as a limitation on the present invention.

## Claims

1. A method for determining an update of a timing offset, performed by a terminal, comprising:
Determining (S101) to update the timing offset; and
updating (S102) the timing offset according to update information sent by a network device;
wherein prior to updating (S102) the timing offset according to the update information sent by the network device, the method further comprises:
receiving (S302) system information sent by the network device, wherein the system information comprises the update information.

2. The method according to claim 1, wherein the update information includes a cell-specific Koffset.

3. The method according to claim 2, wherein the update information further includes a UE-specific Koffset, and a media access control control element, MAC CE, carries the UE-specific Koffset.

4. The method according to claim 1, further comprising:
initiating a random access to the network device.

5. The method according to claim 4, further comprising:
receiving (S501) the update information sent by the network device; and
updating (S502) the timing offset according to the update information.

6. The method according to claim 5, wherein receiving (S302) the update information sent by the network device comprises:
receiving the update information carried in system information from the network device in a preset time window.

7. A method for determining an update of a timing offset, performed by a network device, comprising:
Determining (S601) to update the timing offset of a terminal; and
sending (S602) update information to the terminal for updating the timing offset.
wherein the method further comprising:
sending system information to the terminal, wherein the system information comprises the update information.

8. The method according to claim 7, wherein the update information includes a cell-specific Koffset.

9. The method according to claim 8, wherein the update information further includes a UE-specific Koffset, and a media access control control element, MAC CE, carries the UE-specific Koffset.

10. The method according to claim 7, wherein sending (S602) the update information to the terminal for updating the timing offset comprises:
sending the update information to the terminal through radio resource control, RRC, -dedicated signaling for updating the timing offset.

11. The method according to claim 10, wherein sending the update information to the terminal for updating the timing offset comprises:
sending the update information through system information in a preset time window for updating the timing offset.

12. A communication device, comprising:
a processor; and
a memory for storing a computer program that, when executed by the processor, causes the method for determining the update of the timing offset according to any one of claims 1 to 6 to be implemented.

13. A communication device, comprising:
a processor; and
a memory for storing a computer program that, when executed by the processor, causes the method for determining the update of the timing offset according to any one of claims 7 to 11 to be implemented.

14. A computer-readable storage medium having stored therein a computer program that, when executed by a processor, causes the method for determining the update of the timing offset according to any one of claims 1 to 6 to be implemented.

15. A computer-readable storage medium having stored therein a computer program that, when executed by a processor, causes the method for determining the update of the timing offset according to any one of claims 7 to 11 to be implemented.
